# EUROPÄISCHE PATENTSCHRIFT

(11) **EP 2 755 844 B1**
(45) Veröffentlichungstag und Bekanntmachung des Hinweises auf die Patenterteilung: **28.10.2015**
(21) Anmeldenummer: 12798242.9
(22) Anmeldetag: 26.11.2012
(51) Int. Cl.: B60L 1/00, B61D 49/00

(54) **SCHIENENFAHRZEUG**
RAIL VEHICLE
VÉHICULE FERROVIAIRE

(30) Priorität: 30.11.2011 DE 102011087442
(43) Veröffentlichungstag der Anmeldung: 23.07.2014
(73) Patentinhaber: Siemens Aktiengesellschaft, 80333 München (DE)
(72) Erfinder: DI BONAVENTURA, Stefan, 91186 Büchenbach (DE); MARKL, Jürgen, 91056 Erlangen (DE)
(86) Internationale Anmeldenummer: PCT/EP2012/073575
(87) Internationale Veröffentlichungsnummer: WO 2013/079432

(56) Entgegenhaltungen:
- EP-A1- 0 888 944
- EP-A1- 2 335 994
- JP-A- 2005 112 225
- US-A1- 2010 006 385

## Beschreibung

Die Erfindung betrifft ein Schienenfahrzeug mit zumindest einem Drehgestell und einer Versorgungsvorrichtung zur elektrischen Versorgung, die eine Absicherungseinrichtung, eine im Schienenfahrzeuginnenraum angeordnete, mit der Absicherungseinrichtung elektrisch verbundene Verteilereinrichtung und ein im Schienenfahrzeugsunterflurbereich angeordnetes erstes Gehäuses aufweist, welches mit der Verteilereinrichtung elektrisch verbundene elektrische Komponenten umfasst, wobei das Drehgestell - in Schienenfahrzeugsfahrtrichtung betrachtet - zwischen der Verteilereinrichtung und dem ersten Gehäuse angeordnet ist.

Es sind Triebzüge bekannt, in welchen elektrische Verbraucher einer Wageneinheit mittels einer elektrischen Versorgung betrieben werden, deren Bestandteile in der Form einer Absicherungseinrichtung, einer Verteilereinrichtung und eines mit dieser verbundenen, im Unterflurbereich angeordneten Containers in der Wageneinheit verteilt sind. Hinsichtlich einer einfachen Bedienung durch ein Fahrzeug- und Wartungspersonal ist die Verteilereinrichtung zwangsweise im Schienenfahrzeuginnenraum angeordnet. Zum Zweck einer Konzentration der Bestandteile der elektrischen Versorgungsvorrichtung möglichst an einem Ort ist die Absicherungseinrichtung herkömmlicherweise gemeinsam mit elektrischen Komponenten im Container im Schienenfahrzeugsunterflurbereich angeordnet.

Ist das Drehgestell zwischen der Verteilereinrichtung und dem Container angeordnet, weist diese gemeinsame Anordnung der Absicherungseinrichtung und der elektrischen Komponenten im Container den Nachteil auf, dass doppelte Leitungswege zwischen dem Container und der Verteilereinrichtung vorgesehen sein müssen, die zudem konstruktionsbedingt durch den Drehgestellbereich hindurch geführt werden.

Zum technischen Umfeld wird beispielsweise auf die JP-A-2005112225 verwiesen.

Der Erfindung liegt die Aufgabe zugrunde, ein gattungsgemäßes Schienenfahrzeug bereit zu stellen, bei welchem kurze Leitungswege erreicht werden können und ein doppeltes Verlegen von Leitungen in einem Drehgestellbereich vermieden werden kann.

Hierzu wird vorgeschlagen, dass die Absicherungseinrichtung in einem zweiten, vom ersten Gehäuse unterschiedlichen Gehäuse angeordnet ist, wobei das erste und das zweite Gehäuse - in Schienenfahrzeugsfahrtrichtung betrachtet - beidseitig des Drehgestells angeordnet sind. Dadurch kann eine vorteilhafte Anordnung der Absicherungseinrichtung und der Verteilereinrichtung - in Schienenfahrzeugsfahrtrichtung betrachtet - auf der gleichen Seite des Drehgestells erreicht werden, wobei kürzere Leitungswege erreicht werden können und ein nachteilhaftes Verlegen von Leitungen durch einen Drehgestellbereich vermieden werden kann. Ferner können ein für die Absicherungseinrichtung vorgesehener Bauraum im ersten Gehäuse und für die Absicherungseinrichtung notwendige Kabeleinführungen in dieses Gehäuse vorteilhaft eingespart werden.

Das Schienenfahrzeug kann als einteiliger Triebzug ausgebildet sein oder es kann dazu vorgesehen sein, mit weiteren Schienenfahrzeugen einen Schienenfahrzeugsverband zu bilden. Hierbei kann das Schienenfahrzeug einer Wageneinheit eines Triebzugs entsprechen oder es kann ein Reisezugwagen zum Zusammenstellen eines lokbespannten Zuges sein.

Unter dem "Schienenfahrzeugsinnenraum" soll insbesondere der Raum verstanden werden, welcher vom Schienenfahrzeugkasten umschlossen ist. Vorzugsweise entspricht der Schienenfahrzeugsinnenraum einem Fahrgastraum.

Unter dem "Schienenfahrzeugunterflurbereich" soll insbesondere ein Bereich verstanden werden, welcher - in vertikaler Richtung betrachtet - unterhalb des Bodens des Schienenfahrzeugkastens angeordnet ist.

Die Anordnung einer Einheit "zwischen" zwei weiteren Einheiten und die Anordnung von zwei Einheiten "beidseitig" einer dritten Einheit "in Schienenfahrzeugsfahrtrichtung betrachtet" sollen - in Bezug auf eine sich in Schienenfahrzeugsfahrtrichtung erstreckende Achse - gemäß einer zu dieser Achse senkrecht ausgerichteten Projektion der Einheiten verstanden werden.

Gegenüber weiteren Schutzeinrichtungen, die zum Schutz von lokalen, insbesondere gerätspezifischen Leitungen dienen, weist die Absicherungseinrichtung zweckmäßigerweise die Funktion eines globalen, auf das gesamte Schienenfahrzeug bezogenen Überstromschutzes auf. Hierbei weist die Versorgungsvorrichtung zweckmäßigerweise eine Kabeleinheit auf, die beide Schienenfahrzeugsübergangsbereiche miteinander verbindet und von welcher eine Leitungseinheit zur Verteilereinrichtung an einer Abzweigung abgezweigt ist, wobei die Absicherungseinheit der Abzweigung direkt nachgeschaltet ist. Unter den "Schienenfahrzeugsübergangsbereichen" sollen Bereiche an beiden Enden des Schienenfahrzeugs verstanden werden, in welchen zumindest eine Übergangsvorrichtung zur Herstellung eines Übergangs mit einem benachbarten Schienenfahrzeug, wie z.B. eine mechanische oder elektrische Übergangsschnittstelle, angeordnet ist.

Vorzugsweise ist das zweite Gehäuse im Schienenfahrzeugsunterflurbereich angeordnet, wodurch Bauraum im Schienenfahrzeugsinnenraum eingespart werden kann. Hierbei kann eine Anordnung bereit gestellt werden, in welche die Absicherungseinrichtung und die Verteilereinrichtung - in Bezug auf die vertikale Richtung - übereinander angeordnet sind, wodurch besonders kurze Leitungswege zwischen der Absicherungseinrichtung und der Verteilereinrichtung erreicht werden können.

Ferner wird vorgeschlagen, dass die Verteilereinrichtung zumindest Leitungsschutzschalter aufweist.

Vorteilhafterweise sind elektrische Komponenten des ersten Gehäuses als Schaltgerät ausgebildet.

Die Erfindung eignet sich bevorzugt für eine elektrische Versorgungsvorrichtung, die zur Versorgung mit elektrischer Niederspannung vorgesehen ist bzw. für die Führung einer Niederspannung ausgelegt ist. Insbesondere kann die Niederspannung einen Wert von 110 V aufweisen. Ferner kann die Niederspannung eine Gleichspannung sein.

Des Weiteren wird vorgeschlagen, dass das zweite Gehäuse in einem der Schienenfahrzeugsübergangsbereiche angeordnet ist. Hierdurch kann eine Anordnung des zweiten Gehäuses erreicht werden, die an einen typischen Einbauort der Verteilereinrichtung in einem der Schienenfahrzeugsübergangsbereiche angepasst ist. In diesem Zusammenhang kann vorteilhaft ein bestehendes Bauteil für die Funktion des zweiten Gehäuses genutzt werden, indem das zweite Gehäuse von einem Wagenübergangskasten gebildet ist.

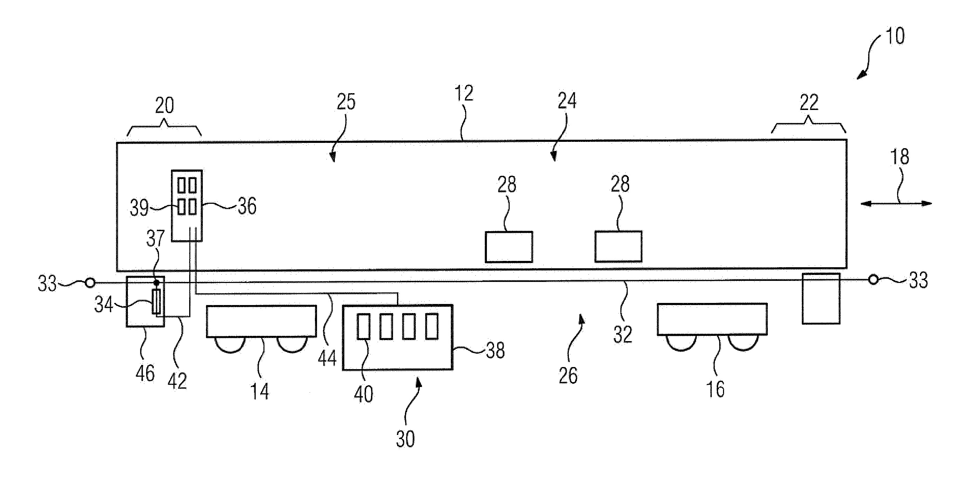

Ein Ausführungsbeispiel wird anhand der Zeichnung erläutert. Es zeigt
- Figur 1:: ein Schienenfahrzeug mit Drehgestellen und einer elektrischen Versorgungsvorrichtung.

Figur 1 zeigt in einer stark schematisierten Seitenansicht ein Schienenfahrzeug 10. Dieses kann als Bestandteil bzw. Wageneinheit eines Triebzugs oder es kann als Reisezugwagen ausgebildet sein. Das Schienenfahrzeug 10 weist einen Schienenfahrzeugkasten 12 auf, welcher auf zwei Drehgestellen 14 und 16 abgestützt ist. Über die Drehgestelle 14, 16 ist der Schienenfahrzeugkasten 12 mit nicht näher dargestellten Schienen verbunden.

In Bezug auf die Anordnung der Drehgestelle 14, 16 und die Schienenfahrzeugsfahrtrichtung 18 kann das Schienenfahrzeug 10 in drei Teilbereichen geteilt werden. In Schienenfahrzeugsfahrtrichtung 18 betrachtet können zwei Bereiche definiert werden, die jeweils zwischen einem Drehgestell 14 bzw. 16 und einem Ende des Schienenfahrzeugkastens 12 angeordnet und Schienenfahrzeugsübergangsbereiche 20, 22 genannt sind. Es wird ein dritter Teilbereich als Mittelbereich 24 definiert, welcher die Schienenfahrzeugsübergangsbereiche 20, 22 miteinander verbindet.

Das Schienenfahrzeug 10 weist ferner einen Schienenfahrzeuginnenraum 25 auf, welcher vom Schienenfahrzeugkasten 12 umschlossen ist. Der sich unterhalb des Bodens des Schienenfahrzeugkastens 12 befindende Bereich wird als Schienenfahrzeugunterflurbereich 26 bezeichnet.

Zur Versorgung von elektrischen Verbrauchern 28 des Schienenfahrzeugs 10 weist dieses eine Versorgungsvorrichtung 30 auf. Diese umfasst eine Kabeleinheit 32, die insbesondere eine Gleichspannung von 110 V führt. Die Kabeleinheit 32 - in der fachmännischen Sprache auch "Sammelschiene" genannt - erstreckt sich in Längsrichtung des Schienenfahrzeugskastens 12 und verbindet beide Schienenfahrzeugsübergangsbereiche 20, 22 miteinander. Die Kabeleinheit 32 weist in beiden Schienenfahrzeugsübergangsbereichen 20, 22 jeweils eine Schnittstelle 33 auf, mit welcher eine elektrische Verbindung mit einer entsprechenden Kabeleinheit eines weiteren Schienenfahrzeugs hergestellt werden kann. Bei der Zusammenstellung eines Schienenfahrzeugsverbands entsteht durch Verbindung der entsprechenden Kabeleinheiten 32 der den Verband bildenden Schienenfahrzeuge miteinander eine verbandweite Leitung.

Die Versorgungsvorrichtung 30 des Schienenfahrzeugs 10 umfasst ferner eine Absicherungseinrichtung 34, die mit der Kabeleinheit 32 elektrisch verbunden ist. Ein weiterer Bestandteil der elektrischen Versorgungsvorrichtung 30 ist von einer Verteilereinrichtung 36 - in der fachmännischen Sprache auch "E-Tafel" genannt - gebildet, die insbesondere Leitungsschutzschalter 38 aufweist. Die Verteilereinrichtung 36 ist im Schienenfahrzeugsinnenraum 25 und - in Bezug auf das Drehschutzschalter 39 aufweist. Die Verteilereinrichtung 36 ist im Schienenfahrzeugsinnenraum 25 und - in Bezug auf das Drehgestell 14 - im Schienenfahrzeugsübergangsbereich 20 angeordnet.

Als weiterer Bestandteil der elektrischen Versorgungsvorrichtung 30 ist ein Gehäuse 38 vorgesehen, das im Mittelbereich 24 und im Schienenfahrzeugsunterflurbereich 26 angeordnet ist. Im Gehäuse 38 sind elektrische Komponenten 40 angeordnet, die insbesondere als Schaltgeräte ausgebildet sind. In der fachmännischen Sprache wird das Gehäuse 38 auch "E-Schaltgeräte-Container" genannt.

Die Absicherungseinrichtung 34 ist mit der Verteilereinrichtung 36 über eine erste Leitungseinheit 42 elektrisch verbunden. Von der Verteilereinrichtung 36 ausgehend ist wiederum eine zweite Leitungseinheit 44 verlegt, die die Verteilereinrichtung 36 mit den elektrischen Komponenten 40 des Gehäuses 38 elektrisch verbindet. Die elektrischen Komponenten 40 des Gehäuses 38 stehen - über nicht näher dargestellte Leitungseinheiten - in Wirkverbindung mit entsprechenden elektrischen Verbrauchern 28.

Die Absicherungseinrichtung 34, gegenüber den Leitungsschutzschaltern 39, welche zum Schutz von gerätespezifischen Leitungen der zweiten Leitungseinheit 44 vorgesehen sind, dient als globale Hauptsicherung des von der Kabeleinheit 32 abgezweigten elektrischen Kreises zur Versorgung der elektrischen Verbraucher 28.

Die Absicherungseinrichtung 34 ist- in Bezug auf die Schaltungstopologie der elektrischen Versorgungsvorrichtung 30 - zwischen der Abzweigung 37 der Kabeleinheit 32 und der Verteilereinrichtung 36 angeordnet. Insbesondere ist die Absicherungseinrichtung 36 der Abzweigung 37 direkt nachgeschaltet. gestell 14 zwischen der Verteilereinrichtung 36 und dem Gehäuse 38 angeordnet. Die zweite Leitungseinheit 44 verläuft zwischen der Verteilereinrichtung 36 und dem Gehäuse 38 demnach durch den Drehgestellbereich hindurch.

Die Abzweigung 37 von der Kabeleinheit 32 und die dieser nachgeschaltete Absicherungseinrichtung 34 sind im Schienenfahrzeugsübergangsbereich 20 angeordnet. Die Absicherungseinrichtung 34 ist in einem zweiten Gehäuse 46 aufgenommen, das im Schienenfahrzeugsübergangsbereich 20 angeordnet ist und einem Wagenübergangskasten entspricht. Da die Absicherungseinrichtung 34 und die Verteilereinrichtung 36 im gleichen Schienenfahrzeugsübergangsbereich 20 angeordnet sind, ist die erste Leitungseinheit 42 ausschließlich im Schienenfahrzeugübergangsbereich 20 verlegt. Sie verläuft daher vorteilhafterweise nicht durch den Drehgestellbereich hindurch. Durch eine Anordnung des ersten Gehäuses 38 und des zweiten Gehäuses 46 beidseitig des Drehgestells 14 kann daher eine vorteilhafte Vereinfachung der Verkabelung erreicht werden.

## Patentansprüche

1. Schienenfahrzeug mit zumindest einem Drehgestell (14) und einer Versorgungsvorrichtung (30) zur elektrischen Versorgung, die eine Absicherungseinrichtung (34), eine im Schienenfahrzeuginnenraum (25) angeordnete, mit der Absicherungseinrichtung (34) elektrisch verbundene Verteilereinrichtung (36) und ein im Schienenfahrzeugsunterflurbereich (26) angeordnetes erstes Gehäuses (38) aufweist, welches mit der Verteilereinrichtung (36) elektrisch verbundene elektrische Komponenten (40) umfasst, die in Wirkverbindung mit entsprechenden elektrischen Verbrauchern (28) stehen, wobei das Drehgestell (14) - in Schienenfahrzeugsfahrtrichtung (18) betrachtet - zwischen der Verteilereinrichtung (36) und dem ersten Gehäuse (38) angeordnet ist,
**dadurch gekennzeichnet, dass**
die Absicherungseinrichtung (34) in einem zweiten, vom ersten Gehäuse (38) unterschiedlichen Gehäuse (46) angeordnet ist, wobei das erste und das zweite Gehäuse (38, 46) - in Schienenfahrzeugsfahrtrichtung (18) betrachtet - beidseitig des Drehgestells (14) angeordnet sind.

2. Schienenfahrzeug nach Anspruch 1,
**dadurch gekennzeichnet, dass**
das zweite Gehäuse (46) im Schienenfahrzeugsunterflurbereich (26) angeordnet ist.

3. Schienenfahrzeug nach Anspruch 1 oder 2,
**dadurch gekennzeichnet, dass**
die Verteilereinrichtung (36) zumindest Leitungsschutzschalter (39) aufweist.

4. Schienenfahrzeug nach einem der vorhergehenden Ansprüche,
**dadurch gekennzeichnet, dass**
elektrische Komponenten (40) des ersten Gehäuses (38) als Schaltgerät ausgebildet sind.

5. Schienenfahrzeug nach einem der vorhergehenden Ansprüche,
**dadurch gekennzeichnet, dass**
die Versorgungsvorrichtung (30) zur Versorgung mit elektrischer Niederspannung vorgesehen ist.

6. Schienenfahrzeug nach einem der vorhergehenden Ansprüche,
**dadurch gekennzeichnet, dass**
das zweite Gehäuse (46) in einem der Schienenfahrzeugsübergangsbereiche (20) angeordnet ist.

7. Schienenfahrzeug nach Anspruch 6,
**dadurch gekennzeichnet, dass**
das zweite Gehäuse (46) von einem Wagenübergangskasten gebildet ist.

8. Schienenfahrzeug nach einem der vorhergehenden Ansprüche,
**dadurch gekennzeichnet, dass**
die Versorgungsvorrichtung (30) eine Kabeleinheit (32) aufweist, die beide Schienenfahrzeugübergangsbereiche (20, 22) miteinander verbindet und von welcher eine Leitungseinheit (42) zur Verteilereinrichtung (36) an einer Abzweigung (37) abgezweigt ist, wobei die Absicherungseinrichtung (34) der Abzweigung (37) direkt nachgeschaltet ist.

## Claims

1. Rail vehicle comprising at least one bogie (14) and a power supply apparatus (30) for supplying electrical power, which power supply apparatus has a fuse protection device (34), a distributor device (36) which is electrically connected to the fuse protection device (34) and is arranged in the interior (25) of the rail vehicle, and a first housing (38) which is arranged in the underfloor area (26) of the rail vehicle and comprises electrical components (40) which are electrically connected to the distributor device (36) and are operatively connected to corresponding electrical loads (28), wherein the bogie (14) - as viewed in the direction (18) of travel of the rail vehicle - is arranged between the distributor device (36) and the first housing (38),
**characterized in that**
the fuse protection device (34) is arranged in a second housing (46) which is different from the first housing (38), wherein the first and the second housing (38, 46) - as viewed in the direction (18) of travel of the rail vehicle - are arranged on either side of the bogie (14).

2. Rail vehicle according to Claim 1,
**characterized in that**
the second housing (46) is arranged in the underfloor area (26) of the rail vehicle.

3. Rail vehicle according to Claim 1 or 2,
**characterized in that**
the distributor device (36) has at least line circuit breakers (39).

4. Rail vehicle according to one of the preceding claims,
**characterized in that**
electrical components (40) of the first housing (38) are in the form of switching equipment.

5. Rail vehicle according to one of the preceding claims,
**characterized in that**
the power supply apparatus (30) is intended to supply a low electrical voltage.

6. Rail vehicle according to one of the preceding claims,
**characterized in that**
the second housing (46) is arranged in one of the transition regions (20) of the rail vehicle.

7. Rail vehicle according to Claim 6,
**characterized in that**
the second housing (46) is formed by a carriage junction box.

8. Rail vehicle according to one of the preceding claims,
**characterized in that**
the power supply apparatus (30) has a cable unit (32) which connects the two transition regions (20, 22) of the rail vehicle to one another and from which a line unit (42) to the distributor device (36) branches off at a branch (37), wherein the fuse protection device (34) is connected directly downstream of the branch (37).

## Revendications

1. Véhicule ferroviaire ayant au moins un boggie ( 14 ) et un dispositif ( 30 ) d'alimentation pour l'alimentation électrique, qui a un dispositif ( 34 ) de sécurité par fusible, un dispositif ( 36 ) formant répartiteur disposé à l'intérieur ( 25 ) du véhicule ferroviaire et relié électriquement au dispositif de sécurité par fusible et un premier boîtier ( 38 ), qui est disposé dans la partie ( 26 ) sous caisse du véhicule ferroviaire et qui comprend des composants ( 4 ) électriques reliés électriquement au dispositif ( 36 ) formant répartiteur et en liaison d'action avec des utilisateurs ( 28 ) électriques correspondants, le boggie ( 14 ) étant - considéré dans le sens ( 18 ) de marche du véhicule ferroviaire - entre le véhicule ( 36 ) formant répartiteur et le premier boîtier ( 38 ),
**caractérisé en ce que**
le dispositif ( 34 ) de sécurité par fusible est disposé dans un deuxième boîtier ( 46 ) différent du premier boîtier ( 38 ), le premier et le deuxième boîtiers ( 38, 46 ) étant - considéré dans le sens ( 18 ) de marche du véhicule ferroviaire - des deux côtés du boggie ( 14 ).

2. Véhicule ferroviaire suivant la revendication 1,
**caractérisé en ce que**
le deuxième boîtier ( 46 ) est disposé dans la partie sous caisse du véhicule ferroviaire.

3. Véhicule ferroviaire suivant la revendication 1 ou 2,
**caractérisé en ce que**
le dispositif ( 36 ) formant répartiteur a au moins un interrupteur à ouverture automatique.

4. Véhicule ferroviaire suivant l'une des revendications précédentes,
**caractérisé en ce que**
des composants ( 40 ) électriques du premier boîtier ( 38 ) sont constitués sous la forme d'un appareil de commutation.

5. Véhicule ferroviaire suivant l'une des revendications précédentes,
**caractérisé en ce que**
le dispositif ( 30 ) d'alimentation est prévu pour l'alimentation en basse tension électrique.

6. Véhicule ferroviaire suivant l'une des revendications précédentes,
**caractérisé en ce que**
le deuxième boîtier ( 46 ) est disposé dans l'une des parties d'intercirculation du véhicule ferroviaire.

7. Véhicule ferroviaire suivant la revendication 6,
**caractérisé en ce que**
le deuxième boîtier ( 46 ) est formé par une caisse de transition de voiture.

8. Véhicule ferroviaire suivant l'une des revendications précédentes,
**caractérisé en ce que**
le dispositif ( 30 ) d'alimentation a une unité ( 32 ) de câble, qui relie entre elles deux parties ( 20, 22 ) d'intercirculation de véhicule ferroviaire et de laquelle bifurque en une bifurcation ( 37 ) une unité ( 42 ) de ligne vers le dispositif ( 36 ) formant répartiteur, le dispositif ( 34 ) de sécurité étant monté directement en aval de la bifurcation ( 37 ).
